# EUROPEAN PATENT APPLICATION

(11) **EP 1 860 850 A2**
(43) Date of publication of application: **28.11.2007**
(21) Application number: 07108538.5
(22) Date of filing: 21.05.2007
(51) Int. Cl.: H04M 1/23, H04M 1/02

(54) **Mobile phone having decoration cover used as key input means**

(30) Priority: 26.05.2006 KR 20060047531
(71) Applicant: Samsung Electronics Co., Ltd., Suwon-si, Gyeonggi-Do (KR)
(72) Inventor: Moon, Jung-Nam, Yeongtong-gu, Suwon-si, Gyeonggi-do (KR); Jung, Kwang-Ho, Yeongtong-gu, Suwon-si, Gyeonggi-do (KR); Lim, Seung-Woo, Yeongtong-gu, Suwon-si, Gyeonggi-do (KR); Kim, Hee-Kwan, Yeongtong-gu, Suwon-si, Gyeonggi-do (KR)
(74) Representative: Zimmer, Franz-Josef

(57) **Abstract**

A mobile terminal has a decoration cover that may be used as an input key. The mobile phone includes an opening formed on a lateral side of a main body of the mobile phone. A switch contact member is provided on the rear surface of the decoration cover. The switch contact member is inserted into the opening and moves with the pressing of the decoration cover to actuate a tact switch mounted in the main body. A rotation support member is provided on the rear surface of the decoration cover and inserted into the opening to support the decoration cover and the switch contact member, which rotatably move upon pressing.

## Description

The present invention relates to a mobile phone having a decoration cover that is also used as a key input means.

Generally, mobile communication terminals are handheld devices that are capable of providing a user and another party with wireless communication service, and include hand held phones (HHPs), CT-2 cellular phones, digital phones, Personal Communications Service (PCS) phones, and personal digital assistants (PDAs). Mobile communication terminals may be bar type, flip type and folder type according to their outward appearance. A bar-type mobile terminal has a bar-shaped single housing. A flip-type mobile terminal has a bar-shaped housing and a flip cover that is rotatably connected to the housing. A folder-type mobile terminal has a bar-shaped housing and a folder that is rotatably connected to the housing by a hinge device. These types of mobile terminals essentially include an antenna, data input/output means, and data transmit/receive means. As a general data input means, keys of a keypad, which has a plurality of keys, may be pressed to input data. Alternatively, a touch pad or a touch screen can be used as a data input means.

Users can send or receive text messages using the keypad.

The keypad often includes a send key SND for initiating an outgoing call or receiving an incoming call, a cancel key, a clear key CLR, alphanumeric keys, an end key END, function keys, and a power key PWR.

Keeping pace with the trend toward small and slim designs, decoration covers of various colors and designs have been arranged on lateral sides of mobile phones, thereby satisfying customer demands for distinctive products.

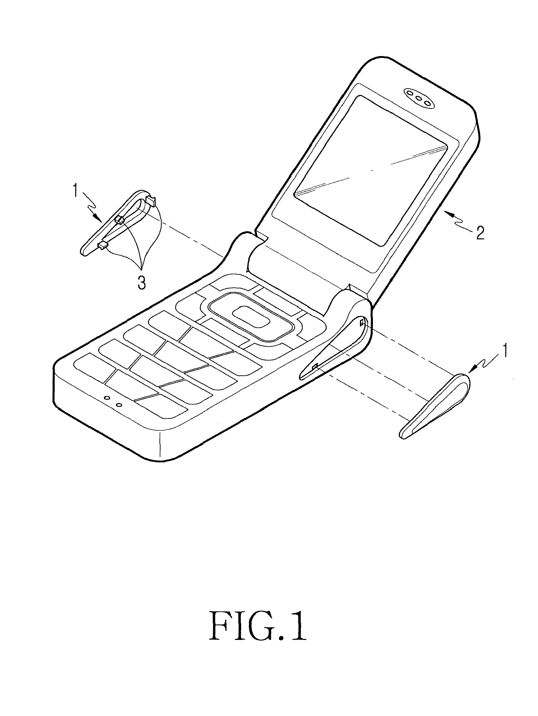

As FIG. 1 shows, a conventional decoration cover 1 for a mobile phone may have a plurality of hooks 3, which can be inserted into each lateral side of a main body 2 of the mobile phone.

The conventional decoration cover, however, is used for decorative purposes only. The cover is not used for a specific function. The limited space on the lateral sides of a mobile phone may limit the use of a decoration cover having an additional function.

Typically, a side key and a decoration cover are both arranged on a lateral side of a mobile phone, which increases the mobile phone's size and manufacturing cost due to the key parts.

It is the object of the present invention to provide a mobile phone having a decoration cover that is used as a key input means.

This object is solved by the subject matter of the independent claims.

Preferred embodiments are defined in the dependent claims.

According to an aspect of the present invention, a mobile phone is provided, wherein the mobile phone has a decoration cover at each lateral side thereof and used as a key input means, which eliminates the need to provide a separate side key, thereby reducing the mobile phone's size and manufacturing cost.

Additional features of the invention will be set forth in the description which follows, and in part will be apparent from the description, or may be learned by practice of the invention.

The present invention discloses a mobile phone having at least one opening arranged on each lateral side of a main body of the mobile phone, and a decoration cover arranged corresponding to the at least one opening. A switch contact member is provided on a rear surface of the decoration cover and inserted into the opening to contact a tact switch mounted in the main body upon pressing of the decoration cover. A rotation support member is provided on the rear surface of the decoration cover and inserted into the opening to support the decoration cover and the switch contact member.

The present invention also discloses a mobile terminal including a first main opening on a first side of a main body of the mobile terminal, and a first decoration cover arranged corresponding to the first main opening. A first switch actuation member is provided on a rear surface of the first decoration cover and arranged in the first main opening to actuate a first switch in the main body upon pressing the first decoration cover. A first rotation support member is provided on the rear surface of the first decoration cover and inserted into the first main opening.

It is to be understood that both the foregoing general description and the following detailed description are exemplary and explanatory and are intended to provide further explanation of the invention as claimed.

The accompanying drawings, which are included to provide a further understanding of the invention and are incorporated in and constitute a part of this specification, illustrate embodiments of the invention, and together with the description serve to explain the principles of the invention.

FIG. 1 is an exploded perspective view of a conventional decoration cover used for a mobile phone.

FIG. 2 is an exploded perspective view of a mobile phone having a decoration cover used as a key input means according to an exemplary embodiment of the present invention.

FIG. 3 is a perspective view of a decoration cover coupled to a mobile phone for use as a key input means according to an exemplary embodiment of the present invention.

FIG. 4 is a side view of a decoration cover coupled to a mobile phone for use as a key input means according to an exemplary embodiment of the present invention.

FIG. 5 is a plane view of a decoration cover coupled to a mobile phone for use as a key input means according to an exemplary embodiment of the present invention.

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

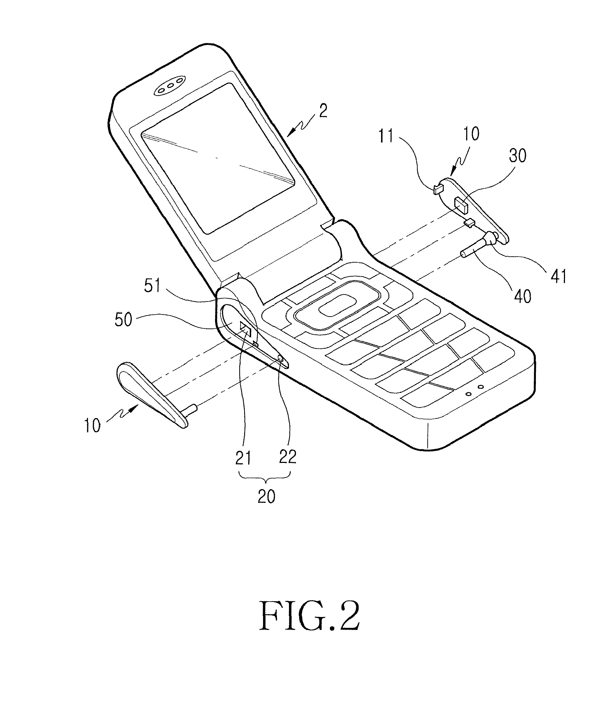

FIG. 2, FIG. 3, and FIG. 5 show a mobile phone having a decoration cover 10 used as a key input means according to an exemplary embodiment of the present invention. The mobile phone includes an opening 20 on at least one lateral side of a main body 2. The mobile phone of FIG. 2 is shown with one opening 20 on each lateral side of the main body 2. The decoration cover 10 includes a switch contact member 30 and a rotation support member 40, both of which are inserted into the opening 20. The switch contact member 30 is provided on the rear surface of the decoration cover 10. The switch contact member 30 is inserted into the opening 20, and pressing the decoration cover 10 causes the switch contact member 30 to actuate a tact switch 60 provided within the main body 2. For example, the switch contact member 30 may actuate the tact switch 60 by contacting the tact switch 60. The rotation support member 40 is also provided at the rear surface of the decoration cover 10 and inserted into the opening 20 to support the decoration cover 10 and the switch contact member 30, which rotatably move upon pressing the decoration cover 10.

As FIG. 2 shows, both lateral sides of the main body 2 have a mount recess 50 of a predetermined depth so that the decoration cover 10 can be mounted on the mount recess 50.

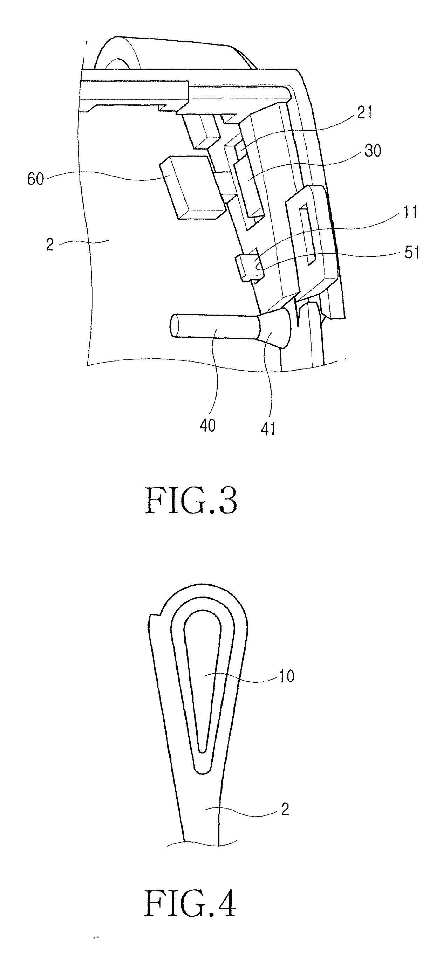

As FIG. 2 and FIG. 3 show, the opening 20 includes a first opening 21 and a second opening 22, which are both formed in the mount recess 50. The switch contact member 30 is inserted into the first opening 21, and the rotation support member 40 is inserted into the second opening 22.

The switch contact member 30 and the rotation support member 40 may both be made of an elastic material, such as polyurethane.

The switch contact member 30 has a projection that can contact the tact switch 60 when the decoration cover 10 is pressed.

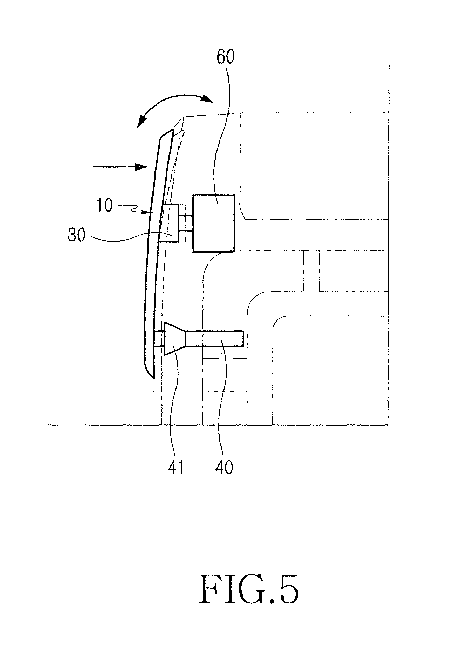

As FIG. 3 and FIG. 5 show, the rotation support member 40 may have a cylindrical stick bar shape having a locking means 41 at one end thereof. Once the rotation support member 40 is forcibly inserted into the second opening 22, the locking means 41 prevents the rotation support member 40 from being released from the second opening 22.

As FIG. 2 shows, the rear surface of the decoration cover 10 further includes at least one support hook 11. The support hook 11 is inserted into a hook hole 51 in the mount recess 50 to support the decoration cover 10 mounted onto the mount recess 50.

Hereinafter, the function of the decoration cover as a key input means according to an exemplary embodiment of the present invention will be explained in detail below with reference to FIG. 2, FIG. 3, FIG. 4, and FIG. 5.

As FIG. 2 and FIG. 3 show, the mobile phone having the decoration cover 10 used as a key input means includes at least one opening 20, the switch contact member 30, and the rotation support member 40.

The main body 2 of the mobile phone has a mount recess 50 on each lateral side thereof so that the decoration cover 10 can be mounted on the mount recess 50. The first opening 21 and the second opening 22 are formed in the mount recess 50.

As FIG. 3 and FIG. 4 show, the decoration cover 10 is mounted on the mount recess 50. Here, the switch contact member 30, which is formed on the rear surface of the decoration cover 10, is inserted into the first opening 21 so that it can contact the tact switch 60 provided within the main body 2 when pressing the decoration cover 10.

As FIG. 2, FIG. 3, and FIG. 5 show, the rotation support member 40 is inserted into the second opening 22. The locking member 41 prevents the rotation support member 40 from coming out of the second opening 22 once the rotation support member 40 is forcibly inserted into the second opening 22.

The rear surface of the decoration cover 10 further includes at least one support hook 11. The support hook 11 is inserted into the hook hole 51 formed on the mount recess 50.

With such a structure, a user can press each decoration cover 10 mounted on the lateral sides of the main body 2 in order to use it as a key input means.

As FIG. 5 shows, when pressed, the decoration cover 10 rotates in a direction of the pressing at a predetermined angle with respect to the rotation support member 40.

With the rotation of the decoration cover 10, the switch contact member 30 contacts the tact switch 60. A signal generated by the contact with the tact switch 60 is applied to the main body 2 of the mobile phone.

The rotation support member 40 may be made of an elastic material to enable rotation of the decoration cover 10 at the predetermined angle.

The rotation support member 40 is inserted into the second opening 22 and supports the decoration cover 10 and the switch contact member 30, which rotatably move upon pressing the decoration cover 10.

A decoration cover having the above structure can be used as a key input means, thereby eliminating the need to provide a separate key on the side of the mobile phone. Thus, it may be possible to reduce the size of the mobile phone and the manufacturing cost due to the reduced number of components.

It will be apparent to those skilled in the art that various modifications and variation can be made in the present invention without departing from the scope of the invention. Thus, it is intended that the present invention cover the modifications and variations of this invention provided they come within the scope of the appended claims. For example, the decoration cover according to an exemplary embodiment of the present invention is applicable to all types of mobile terminals.

## Claims

1. A mobile phone, comprising:
an opening arranged on each lateral side of a main body of the mobile phone;
a decoration cover arranged corresponding to the opening;
a switch contact member provided on a rear surface of the decoration cover, the switch contact member being inserted into the opening to contact a tact switch in the main body upon pressing the decoration cover; and
a rotation support member provided on the rear surface of the decoration cover and inserted into the opening to support the decoration cover and the switch contact member.

2. The mobile phone of claim 1, further comprising a mount recess on each lateral side of the main body, the decoration cover being mounted on the mount recess.

3. The mobile phone of claim 2, wherein the opening comprises:
a first opening in the mount recess, the switch contact member being arranged in the first opening; and
a second opening in the mount recess, the rotation support member being arranged in the second opening.

4. The mobile phone of one of claims 1 to 3, wherein the switch contact member and the rotation support member comprise an elastic material.

5. The mobile phone of claim 4, wherein the plastic material comprises polyurethane.

6. The mobile phone of one of claims 1 to 5, wherein the switch contact member comprises a projection.

7. The mobile phone of claim 3, wherein the rotation support member comprises a cylindrical stick bar shape and a locking means at one end thereof.

8. The mobile phone of claim 2, further comprising a support hook provided on the rear surface of the decoration cover, the support hook being inserted into a hook hole in the mount recess.

9. The mobile phone of one of claims 1 to 8, wherein the decoration cover is a key input means.

10. A mobile terminal, comprising:
a first main opening on a first side of a main body of the mobile terminal;
a first decoration cover arranged corresponding to the first main opening;
a first switch actuation member provided on a rear surface of the first decoration cover, the first switch actuation member being arranged in the first main opening to actuate a first switch in the main body upon pressing the first decoration cover; and
a first rotation support member provided on the rear surface of the first decoration cover and inserted into the first main opening.

11. The mobile terminal of claim 10, further comprising:
a second main opening on a second side of the main body;
a second decoration cover arranged corresponding to the second main opening;
a second switch actuation member provided on a rear surface of the second decoration cover, the second switch actuation member being arranged in the second main opening to actuate a second switch in the main body upon pressing the second decoration cover; and
a second rotation support member provided on the rear surface of the second decoration cover and inserted into the second main opening.

12. The mobile terminal of claim 11, further comprising:
a first mount recess on the first side of the main body, the first decoration cover being mounted on the first mount recess; and
a second mount recess on the second side of the main body, the second decoration cover being mounted on the second mount recess.

13. The mobile terminal of claim 12, wherein the first main opening comprises a first opening and a second opening in the first mount recess, the first switch actuation member being arranged in the first opening and the first rotation support member being arranged in the second opening; and
wherein the second main opening comprises a first opening and a second opening in the second mount recess, the second switch actuation member being arranged in the first opening and the second rotation support member being arranged in the second opening.

14. The mobile terminal of one of claims 10 to 13, wherein the first switch actuation member and the first rotation support member comprise an elastic material.

15. The mobile terminal of claim 14, wherein the plastic material comprises polyurethane.

16. The mobile terminal of one of claims 10 to 15, wherein the first switch actuation member comprises a projection.

17. The mobile terminal of one of claims 10 to 16, wherein the first rotation support member comprises a cylindrical stick bar shape and a locking device at one end thereof.

18. The mobile terminal of claim 12, further comprising a support hook provided on the rear surface of the first decoration cover, the support hook being inserted into a hook hole in the first mount recess.

19. The mobile terminal of one of claims 10 to 18, wherein the first decoration cover is a key input means.

20. The mobile terminal of one of claims 10 to 19, wherein the first actuation member actuates the first switch by contacting the first switch.
